# EUROPEAN PATENT SPECIFICATION

(11) **EP 2 882 208 B1**
(45) Date of publication and mention of the grant of the patent: **12.09.2018**
(21) Application number: 13825863.7
(22) Date of filing: 19.07.2013
(51) Int. Cl.: H04W 12/02, H04W 4/00, H04L 29/06

(54) **METHOD, APPARATUS, SYSTEM, AND RELATED DEVICE FOR DATA TRANSMISSION**
VERFAHREN, VORRICHTUNG, SYSTEM UND ZUGEHÖRIGE VORRICHTUNG ZUR DATENÜBERTRAGUNG
PROCÉDÉ, APPAREIL, SYSTÈME ET DISPOSITIF APPARENTÉ POUR TRANSMISSION DE DONNÉES

(30) Priority: 30.07.2012 CN 201210266889
(43) Date of publication of application: 10.06.2015
(73) Proprietor: China Mobile Communications Corporation, Beijing 100032 (CN)
(72) Inventor: JIANG, Xiaowei, Beijing 100032 (CN); YANG, Ning, Beijing 100032 (CN); WU, Weimin, Beijing 100032 (CN)
(74) Representative: Epping - Hermann - Fischer
(86) International application number: PCT/CN2013/079661
(87) International publication number: WO 2014/019456

(56) References cited:
- WO-A1-2012/097620
- WO-A2-2012/078000
- CN-A- 1 942 002
- CN-A- 101 060 404
- CN-A- 101 631 306
- CN-A- 102 457 844
- US-A1- 2003 078 061

## Description

### Field

The present invention relates to the field of wireless communications and particularly to a data transmission method, apparatus, system and relevant devices.

### Background

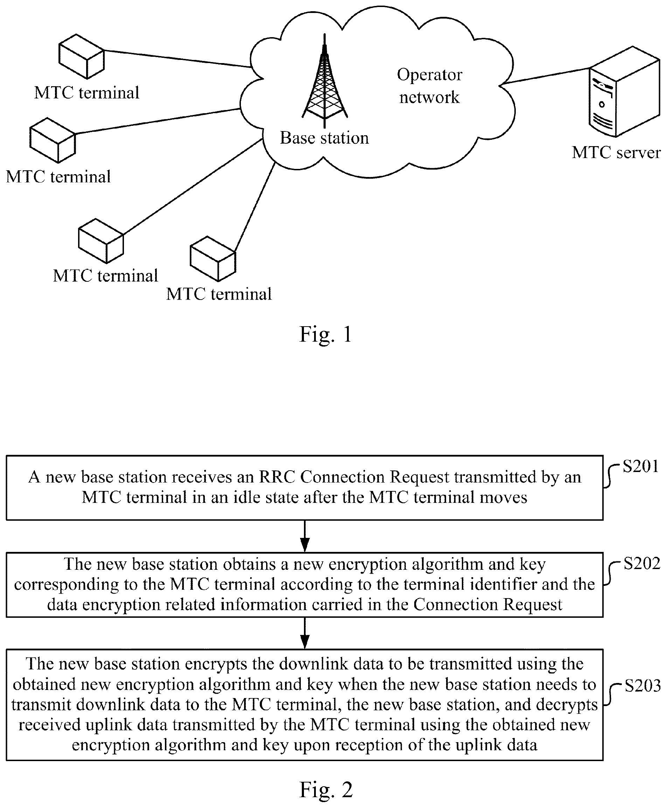

Machine-Type Communication (MTC) refers to a communication scheme between one machine and another machine or one device and another device (Machine to Machine, i.e., M2M) without involving any person. As illustrated in Fig.1 which is a schematic diagram of a scenario of communication between MTC terminals in the prior art, the respective MTC terminals communicate with each other through an MTC server over an operator network, and the respective MTC terminals can both transmit uplink data to the MTC server and receive downlink data transmitted by the MTC server, here the data is transmitted between the MTC terminals and the MTC server through a base station.

Along with dramatic development of M2M services, the scale of MTC terminals is expected to grow explosively so that the number of MTC terminals in the same cell may reach tens of thousands. The core network specification 3GPP 22.368 defines sixteen important characteristics of an MTC terminal, including low mobility, temporal control, delay tolerance, online small data transmission, etc., and there are a variety of applications including meter reading, remote control, etc., with one or a combination of the characteristics.

Ongoing MTC researches are focused primarily on the necessity to optimize this type of communication from the perspective of the network and on a potential influence thereof upon human to human communication particularly when a huge number of MTC terminals are applied to the real network. For the M2M services, a kind of important services is for the MTC terminals to acquire and report data, e.g., an intelligent electricity meter, water meter, gas meter, etc., and such kind of service is characterized by a small amount of acquired data, transmission time at a regular interval and a concurrent access to the network, and if the MTC terminals in the same cell access the network concurrently, then the network may suffer from congestion.

In order to address the problem above, data transmission methods in an idle state have been proposed in the prior art, and at present the existing data transmission methods in an idle state include the following methods:
(1) The base station does not indicate a fixed resource on which data is transmitted in an idle state. In this case, the MTC terminals access the network randomly and transmit uplink data in a third stage of the random access when they transmits an Radio Resource Control (RRC) Connection Request to the base station, and the base station transmits downlink data to the MTC terminals in a fourth stage of the random access when the base station returns a response message, to the RRC Connection Request, carrying the downlink data.
(2) The base station indicates a fixed resource on which data is transmitted in an idle state. In this case, the base station allocates fixed resources, on which data is transmitted in an idle state, for the MTC terminals when the MTC terminals are in connected state, and the MTC terminals transmit data on the fixed resources, allocated by the base station, when they are in an idle state.

Moreover in the two data transmission methods in an idle state above, in order to secure transmission of data, the MTC terminals and the base station need to negotiate about and buffer a data encryption key and an encryption algorithm when they are in a connected state, to encrypt/decrypt data being transmitted in an idle state; and when data is being transmitted in an idle state, if the data is uplink data, then the uplink data to be transmitted is encrypted using the buffered encryption algorithm and key on every occasion of available time and frequency resources allocated by the base station and transmitted, and the base station receives and decrypts the uplink data using the buffered key on that occasion; and if the data is downlink data, then the base station encrypts temporarily using the buffered encryption algorithm and key and transmits the data on a corresponding occasion, and the MTC terminals receives and decrypts the downlink data using the buffered key on that occasion.

However if some MTC terminal is moving, then the method (1) fails to address how the MTC terminal moving to a new cell encrypts data transmitted between the terminal and a new base station, whereas for the method (2), the encryption key and the encryption algorithm as a result of negotiation with the source base station may become unavailable to the MTC terminal moving a new cell, so it is highly desirable to address the technical problem in the prior art of how the data is transmitted between the MTC terminal and the base station after the MTC terminal moves.

WO 2012/078000 A2 relates to a method in which a terminal accesses a base station in a wireless communication system and to a terminal thereof. The method includes broadcasting, to at least one base station, an advertisement message containing identification information for advertising existence of the terminal; receiving, from the base station, an inviting message which allows access to the base station; and performing an access procedure with the base station in accordance with the received inviting message. The present description further relates to a method in which a base station accesses a terminal in a wireless communication system, the method including receiving an advertisement message which is broadcasted by the terminal and contains identification information for advertising existence of the terminal; transmitting, to the terminal, an inviting message which allows access to the base station; and performing an access procedure with the terminal in accordance with the inviting message.

### Summary

Embodiments of the invention provide a data transmission method, apparatus, system and related device so as to transmit data between an MTC terminal and a base station after the MTC terminal in an idle state moves.

An embodiment of the invention provides a data transmission method including:
receiving, by a new base station, an RRC Connection Request transmitted by an MTC terminal in an idle state after the MTC terminal moves, wherein the Connection Request carries a terminal identifier of the MTC terminal and data encryption related information of the MTC terminal;
obtaining, by the new base station, a new encryption algorithm and key corresponding to the MTC terminal according to the terminal identifier and the data encryption related information; and
encrypting downlink data to be transmitted to the MTC terminal using the obtained new encryption algorithm and key, and decrypting uplink data transmitted by the the MTC terminal using the obtained new encryption algorithm and key.

As can be apparent from the method above, after the MTC terminal moves, the new base station accepts a random access initiated by the MTC terminal and identifies the terminal identifier and the data encryption information in the received RRC Connection Request, so that the new base station can obtain the new encryption algorithm and key corresponding to the MTC terminal according to the terminal identifier and the data encryption information, and in this way, the new base station can encrypt data to be transmitted, and decrypt received data, using the obtained new encryption algorithm and key, thus enabling the data to be transmitted with the MTC terminal.

Preferably if a source base station does not indicate a fixed resource, over which data is transmitted in an idle state, before the MTC terminal moves, then the data encryption related information includes an encryption algorithm input parameter; and
obtaining, by the new base station, the new encryption algorithm and key corresponding to the MTC terminal according to the terminal identifier and the data encryption related information includes:
obtaining, by the new base station, an original encryption algorithm and key corresponding to the MTC terminal according to the terminal identifier;
updating the obtained original encryption algorithm using the encryption algorithm input parameter; and
determining the updated encryption algorithm as the new encryption algorithm corresponding to the MTC terminal.

Since the source base station does not indicate a fixed resource, over which data is transmitted in an idle state, before the MTC terminal moves, the MTC terminal can take the encryption algorithm input parameter as the data encryption related information and transmit it to the new base station, so that the new base station updates the original encryption algorithm directly using the encryption algorithm input parameter.

Preferably if a source base station indicates a fixed resource, over which data is transmitted in an idle state, before the MTC terminal moves, then the data encryption related information includes an E-UTRAN Cell Global Identifier (ECGI) of a cell where the MTC terminal resides before the MTC terminal moves; and
obtaining, by the new base station, the new encryption algorithm and key corresponding to the MTC terminal according to the terminal identifier and the data encryption related information includes:
obtaining, by the new base station, an original encryption algorithm, encryption algorithm input parameter and key corresponding to the terminal identifier from the cell corresponding to the ECGI;
updating the obtained original encryption algorithm using the encryption algorithm input parameter; and
determining the updated encryption algorithm as the new encryption algorithm corresponding to the MTC terminal.

Since the source base station indicates a fixed resource, over which data is transmitted in an idle state, before the MTC terminal moves, the MTC terminal can transmit the ECGI of the cell, where the MTC terminal resides before it moves, to the new base station as the data encryption related information, so that the new base station obtains the original encryption algorithm, encryption algorithm input parameter and key of the MTC terminal from the corresponding cell and updates the encryption algorithm.

Preferably the method further includes: allocating, by the new base station, for the MTC terminal a transmission resource over which data is transmitted in an idle state;
instructing the MTC terminal in a response message to the Connection Request to transmit uplink data over the allocated transmission resource after entering an idle state; and
transmitting uplink data to the MTC terminal over the allocated transmission resource after the MTC terminals enters the idle state.

Since the fixed transmission resource allocated by the source base station for the MTC terminal will be unavailable after the MTC terminal moves, the new base station will reallocate a fixed transmission resource for the MTC terminal so that the MTC terminal transmits data with the new base station over the reallocated transmission resource after the MTC terminal enters an idle state.

An embodiment of the invention provides a data transmission apparatus including:
a receiving unit configured to receive an RRC Connection Request transmitted by an MTC terminal in an idle state after the MTC terminal moves, wherein the Connection Request carries a terminal identifier of the MTC terminal and data encryption related information of the MTC terminal;
an obtaining unit configured to obtain a new encryption algorithm and key corresponding to the MTC terminal according to the terminal identifier and the data encryption related information received by the receiving unit;
an encrypting unit configured to encrypt downlink data to be transmitted to the MTC terminal using the obtained new encryption algorithm and key; and
a decrypting unit configured to decrypt uplink data transmitted by the MTC terminal using the obtained new encryption algorithm and key.

As can be apparent from the apparatus above, after the MTC terminal moves, the new base station accepts a random access initiated by the MTC terminal and identifies the terminal identifier and the data encryption information in the received RRC Connection Request, so that the new base station can obtain the new encryption algorithm and key corresponding to the MTC terminal according to the terminal identifier and the data encryption information, and in this way, the new base station can encrypt data to be transmitted, and decrypt received data, using the obtained new encryption algorithm and key, thus enabling the data to be transmitted between the MTC terminal and the base station.

Preferably if a source base station does not indicate a fixed resource, over which data is transmitted in an idle state, before the MTC terminal moves, then the data encryption related information includes an encryption algorithm input parameter; and
the obtaining unit includes:
a first obtaining sub-unit configured to obtain an original encryption algorithm and key corresponding to the MTC terminal according to the terminal identifier;
a first updating sub-unit configured to update the obtained original encryption algorithm using the encryption algorithm input parameter; and
a first determining sub-unit configured to determine the encryption algorithm updated by the first updating sub-unit as the new encryption algorithm corresponding to the MTC terminal.

Since the source base station does not indicate a fixed resource, over which data is transmitted in an idle state, before the MTC terminal moves, the MTC terminal can transmit the encryption algorithm input parameter to the new base station as the data encryption related information, so that the new base station updates the original encryption algorithm directly using the encryption algorithm input parameter.

Preferably if a source base station indicates a fixed resource, over which data is transmitted in an idle state, before the MTC terminal moves, then the data encryption related information includes an EDGI of a cell where the MTC terminal resides before the MTC terminal moves; and
the obtaining unit includes:
a second obtaining sub-unit configured to obtain an original encryption algorithm, encryption algorithm input parameter and key corresponding to the terminal identifier from the cell corresponding to the ECGI;
a second updating sub-unit configured to update the obtained original encryption algorithm using the encryption algorithm input parameter; and
a second determining sub-unit configured to determine the encryption algorithm updated by the second updating sub-unit as the new encryption algorithm corresponding to the MTC terminal.

Since the source base station indicates a fixed resource, over which data is transmitted in an idle state, before the MTC terminal moves, the MTC terminal can transmit the ECGI of the cell, where the MTC terminal resides before the MTC terminal moves, to the new base station as the data encryption related information, so that the new base station obtains the original encryption algorithm, encryption algorithm input parameter and key of the MTC terminal from the corresponding cell and updates the encryption algorithm.

Preferably the apparatus further includes:
a resource allocating unit configured to allocate for the MTC terminal a transmission resource over which data is transmitted in an idle state;
an instructing unit configured to instruct the MTC terminal in a response message to the Connection Request to transmit uplink data over the allocated transmission resource after entering an idle state; and
a transmitting unit configured to transmit uplink data to the MTC terminal over the allocated transmission resource after the MTC terminals enters the idle state.

Since the fixed transmission resource allocated by the source base station for the MTC terminal will be unavailable after the MTC terminal moves, the new base station will reallocate a fixed transmission resource for the MTC terminal so that the MTC terminal transmits data with the new base station over the reallocated transmission resource after the MTC terminal enters an idle state.

An embodiment of the invention provides a base station device including the data transmission apparatus above.

The data transmission apparatus above can accepts a random access initiated by the MTC terminal after the MTC terminal moves, and identify the terminal identifier and the data encryption information in the received RRC Connection Request, and can obtain the new encryption algorithm and key corresponding to the MTC terminal according to the terminal identifier and the data encryption information, so that the new base station can encrypt data to be transmitted, and decrypt received data, using the obtained new encryption algorithm and key, thus enabling the data to be transmitted with the MTC terminal; and the base station device including the data transmission apparatus above can also function as the new base station where the MTC terminal resides after the MTC terminal resides.

An embodiment of the invention provides another data transmission method including:
transmitting, by an MTC terminal in an idle state, an RRC Connection Request to a new base station after the MTC terminal moves, wherein the Connection Request carries a terminal identifier of the MTC terminal and data encryption related information of the MTC terminal;
receiving, by the MTC terminal, an encryption algorithm and key transmitted by the new base station, wherein the encryption algorithm and key are obtained by the new base station according to the terminal identifier and the data encryption related information; and
encrypting, by the MTC terminal, uplink data to be transmitted to the new base station using the received encryption algorithm and key and decrypting downlink data transmitted by the new base station using the received encryption algorithm and key.

As can be apparent from the method above, after the MTC terminal moves, the MTC terminal initiates a random access to the new base station and carries its own terminal identifier and data encryption information in the RRC Connection Request, and the new base station obtains and then transmits to the MTC terminal the new encryption algorithm and key corresponding to the MTC terminal according to the terminal identifier and the data encryption information, so that the MTC terminal can encrypt data to be transmitted, and decrypt received data, using the received new encryption algorithm and key, thus enabling the data to be transmitted between the MTC terminal and the base station.

Preferably the method further includes:
receiving, by the MTC terminal, indication information, transmitted by the new base station, of a transmission resource over which data is transmitted after the MTC terminal enters an idle state, wherein the indication information is indicated by the new base station in a response message to the Connection Request; and
transmitting uplink data over the transmission resource indicated by the indication information after entering an idle state.

Since the fixed transmission resource allocated by the source base station for the MTC terminal will be unavailable after the MTC terminal moves, the new base station will reallocate a fixed transmission resource for the MTC terminal so that the MTC terminal transmits data with the new base station over the reallocated transmission resource after the MTC terminal enters an idle state.

An embodiment of the invention provides another data transmission apparatus including:
a sending unit configured to transmit an RRC Connection Request to a new base station after an MTC terminal, in an idle state, in which the apparatus resides moves, wherein the Connection Request carries a terminal identifier of the MTC terminal and data encryption related information of the MTC terminal;
a receiving unit configured to receive an encryption algorithm and key transmitted by the new base station, wherein the encryption algorithm and key are obtained by the new base station according to the terminal identifier of the MTC terminal and the data encryption related information, of the MTC terminal;
an encrypting unit configured to encrypt uplink data to be transmitted to the new base station using the received encryption algorithm and key; and
a decrypting unit configured to decrypt downlink data transmitted by the new base station using the received encryption algorithm and key.

As can be apparent from the apparatus above, after the MTC terminal moves, the MTC terminal initiates a random access to the new base station and carries its own terminal identifier and data encryption information in the RRC Connection Request, and thus the new base station can obtain the new encryption algorithm and key corresponding to the MTC terminal according to the terminal identifier and the data encryption information; and for the MTC terminal, the base station notifies the MTC terminal of the obtained new encryption algorithm and key, so that the MTC terminal can encrypt data to be transmitted, and decrypt received data, using the received new encryption algorithm and key, thus enabling the data to be transmitted between the MTC terminal and the base station.

Preferably the apparatus further includes a transmitting unit, wherein:
the receiving unit is further configured to receive indication information, transmitted by the new base station, of a transmission resource over which data is transmitted in an idle state, wherein the indication information is indicated by the new base station in a response message to the RRC Connection Request; and
the transmitting unit is configured to transmit uplink data over the transmission resource indicated by the indication information after the MTC terminal enters an idle state.

Since the fixed transmission resource allocated by the source base station for the MTC terminal will be unavailable after the MTC terminal moves, the new base station will reallocate a fixed transmission resource for the MTC terminal so that the MTC terminal transmits data with the new base station over the reallocated transmission resource after the MTC terminal enters an idle state.

An embodiment of the invention provides an MTC terminal device including the data transmission apparatus above.

Since the data transmission apparatus above can initiate a random access to the new base station after the MTC terminal moves, and carry the terminal identifier and the data encryption information in the transmitted RRC Connection Request, and thus the new base station can obtain the new encryption algorithm and key corresponding to the MTC terminal according to the terminal identifier and the data encryption information, so that the data transmission apparatus can encrypt data to be transmitted, and decrypt received data, using the received new encryption algorithm and key, thus enabling the data to be transmitted with the base station; and the MTC terminal device including the data transmission apparatus above can also function as above.

An embodiment of the invention provides a data transmission system including a base station device and an MTC terminal device, wherein the base station device includes the first data transmission apparatus above, and the MTC terminal device includes the second data transmission apparatus above.

Since when the base station device including the first data transmission apparatus above and the MTC terminal device including the second data transmission apparatus above interacts, after the MTC terminal moves, the MTC terminal initiates a random access to the new base station and carries its own terminal identifier and data encryption information in an RRC Connection Request, so that the new base station can obtain a new encryption algorithm and key corresponding to the MTC terminal according to the terminal identifier and the data encryption information, and thus the new base station can encrypt data to be transmitted, and decrypt received data, using the obtained new encryption algorithm and key; and the MTC terminal can receive and use the new encryption algorithm and key transmitted by the new base station to encrypt data to be transmitted and to decrypt received data, thus enabling data to be transmitted between the MTC terminal and the base station.

Other features and advantages of the invention will be set forth in the following description and will partially become apparent from the description or can be learned from a practice of the invention. The objects and the other advantages of the invention can be attained and achieved from the structure particularly pointed out in the written description, claims and the drawings.

### Brief Description of the Drawings

In order to describe more clearly the technical solutions according to the embodiments of the invention or in the prior art, the drawings to which reference is made in the description of the embodiments or the prior art will be described below briefly, and evidently the drawings described below are merely illustrative of some of the embodiments of the invention, and those ordinarily skilled in the art can further derive other drawings from these drawings without any inventive effort. In the drawings:
Fig. 1 illustrates a schematic diagram of a scenario of communication between MTC terminals in the prior art;
Fig.2 illustrates a schematic flow chart of an implementation of a data transmission method at the network side according to an embodiment of the invention;
Fig.3 illustrates a schematic structural diagram of a data transmission apparatus at the network side according to an embodiment of the invention;
Fig.4 illustrates a schematic flow chart of an implementation of a data transmission method at the terminal side according to an embodiment of the invention;
Fig.5 illustrates a schematic structural diagram of a data transmission apparatus at the terminal side according to an embodiment of the invention; and
Fig.6 illustrates a schematic structural diagram of a data transmission system according to an embodiment of the invention.

### Detailed Description of the Embodiments

In order to enable data to be transmitted between an MTC terminal and a new base station after the MTC terminal moves in an idle state, embodiments of the invention provides a data transmission method, apparatus, system and related devices.

In order to better understand the embodiments of the invention, a flow of data transmission between an MTC terminal and a base station before the MTC terminal moves will be described below. For the sake of a convenient description, a base station with which the MTC terminal is connected before the MTC terminal moves is referred to as a source base station, and a base station with which the MTC terminal is connected after it moves is referred to as a new base station.

Particularly a schematic diagram of a data transmission flow between an MTC terminal and a source base station before the MTC terminal moves can include the following operaions:
In a first operation, the MTC terminal in a connected state reports its own relevant information to the source base station;
The relevant information reported by the MTC terminal to the source base station can include its own mobility information, the size, frequency and direction of data transmission, etc.;
In a second operation, the source base station indicates the MTC terminal an available transmission resource on which the MTC terminal transmit data (uplink/downlink) in an idle state, and encryption algorithm and key information used in data transmission;
In a particular implementation, if the source base station may not allocate an available transmission resource, on which the MTC transmits data in an idle state, for the MTC terminal due to mobility and the data transmission frequency of the MTC terminal, then the MTC terminal needing to transmit data in an idle state can transmit the data to the source base station in a random access, and in this case, the source base station may indicate only the encryption algorithm and key to the MTC terminal in the operation S102.

In a third operation, after the MTC terminal enters an idle state, the source base station and the MTC terminal encrypt the data to be transmitted using the encryption algorithm and key.

If the source base station indicates an available transmission resource over which data is transmitted in an idle state, then uplink data is transmitted over the transmission resource indicated by the source base station, and also the source base station transmits downlink data over the allocated transmission resource; and if the source base station does not indicates a transmission resource, then the UE needing to transmit uplink data initiates a random access and the uplink data is carried by the UE in a third stage of the random access (that is the UE transmits an RRC Connection Request to the source base station), and of course, the uplink data needs to be encrypted using the encryption algorithm and key issued by the source base station; and downlink data to be transmitted is carried by the base station in a fourth stage of the random access (that is the source base station transmits a response message, to the RRC Connection Request, to the MTC terminal), and of course, the downlink data also needs to be encrypted using the same encryption algorithm and key.

After the MTC terminal moves to a new cell, the encryption algorithm and key indicated by the source base station will be unavailable so that no data can be transmitted between a new base station and the MTC terminal. In order to address this problem, an embodiment of the invention provides a data transmission method, and as illustrated in Fig.2 which is a schematic flow chart of an implementation of a data transmission method at the network side according to an embodiment of the invention, the method includes the following operations:
S201. Anew base station receives an RRC Connection Request transmitted by an MTC terminal in an idle state after the MTC terminal moves;
The RRC Connection Request carries a terminal identifier of the MTC terminal, which can be an SAE Temporary Mobile Subscriber Identity (S-TMSI), and data encryption related information of the MTC terminal. In a particular implementation, after the MTC terminal moves to a new cell, if a new base station needs to transmit downlink data to the MTC terminal, the new base station can page the MTC terminal to enable the MTC terminal to initiate a random access.

After the MTC terminal initiates the random access, if the new source base station does not indicate a transmission resource over which data is transmitted in an idle state, then in a third stage of the random access, the MTC terminal can transmits the RRC Connection Request, which carries the data encryption related information including an encryption algorithm input parameter, to the new base station, and the encryption algorithm input parameter can be used to update a data encryption algorithm next time the terminal enters an idle state, for example, the parameter can be a Packet Data Convergence Protocol (PDCP) Count, the value of which is related to data transmission so that the PDCP COUNT is incremented by 1 each time data (including uplink and downlink) is transmitted between the base station and the MTC terminal; and if the source base station has indicated a transmission resource over which data is transmitted in an idle state, then in the third stage of the random access, the MTC terminal transmits the RRC Connection Request to the MTC terminal, which carries the data encryption related information including an E-UTRAN Cell Global Identifier (ECGI) of a cell where the MTC terminal resides before the MTC terminal moves to the new base station,
S202. The new base station obtains a new encryption algorithm and key corresponding to the MTC terminal according to the terminal identifier and the data encryption related information carried in the Connection Request.

If the Connection Request received by the new base station carries the terminal identifier and the encryption algorithm input parameter, then the new base station requests a Mobility Management Entity (MME), according to the terminal identifier, for an original encryption algorithm and key of the MTC terminal, updates the obtained original encryption algorithm using the encryption algorithm input parameter and determines the updated encryption algorithm as a new encryption algorithm corresponding to the MTC terminal; and if the Connection Request received by the new base station carries the terminal identifier and the ECGI of the cell where the MTC terminal resides before the MTC terminal moves, then the new base station requests the cell identified by the ECGI for a context (including the size of data packets, a data transmission direction, an interval at which the data packets are transmitted, the encryption algorithm and key used for data transmission, and the encryption algorithm input parameter) of the MTC terminal corresponding to the terminal identifier, updates the obtained original encryption algorithm using the encryption algorithm input parameter and determines the updated encryption algorithm as a new encryption algorithm corresponding to the MTC terminal.

S203. When the new base station needs to transmit downlink data to the MTC terminal, the new base station encrypts the downlink data to be transmitted using the obtained new encryption algorithm and key, and the new base station decrypts received uplink data transmitted by the MTC terminal using the obtained new encryption algorithm and key upon reception of the uplink data.

In a particular implementation, the fixed transmission resource allocated by the source base station for the MTC terminal will be unavailable after the MTC terminal moves, so the new base station can further reallocate for the MTC terminal a fixed transmission resource over which the MTC terminal transmits/receives data to/from the new base station after the MTC terminal entering an idle state. Following this, the data transmission method at the network side according to the embodiment of the invention can further include the following operations:
In a first operation, the new base station allocates for the MTC terminal a transmission resource over which data is transmitted in an idle state;
In a second operation, the new base station instructs the MTC terminal in a response message to the RRC Connection Request to transmit uplink data over the allocated transmission resource after the MTC terminal enters an idle state; and
In a third operation, the new base station transmits downlink data to the MTC terminal over the allocated transmission resource after the MTC terminals enters an idle state.

It shall be noted that the three operations above can be performed after the operation S202 and before the operation S203 or can be performed after the operation S203.

In a particular implementation, after the MTC terminal moves, if the new base station doesn't reallocate a fixed transmission resource for the MTC terminal, then the MTC terminal needing to transmit uplink data can initiate a random access, the uplink data to be transmitted is carried in a third stage of the random access by the MTC terminal, and the downlink data to be transmitted is carried by the base station in a fourth stage of the random access. Of course, both the uplink data and the downlink data transmitted between the MTC terminal and the base station needs to be encrypted.

During the process above, after the MTC terminal moves, if the new base station needs to transmit downlink data to the MTC terminal, then the new station pages the MTC terminal to enable the MTC terminal to initiate a random access, and the terminal identifier and the data encryption related information is carried in a third stage of the random access by the MTC terminal, so that the base station can obtain the new encryption algorithm and key corresponding to the MTC terminal from such information, and encrypt the downlink data to be transmitted, and decrypt received uplink data, using the obtained encryption algorithm and key, thus enabling the data to be transmitted between the base station and the MTC terminal after the MTC terminal moves.

### Second Embodiment

The second embodiment based upon the same inventive idea as the first embodiment provides a data transmission apparatus, and since the apparatus addresses the problem under a similar principle to the data transmission method above, reference can be made to the implementation of the method for an implementation of the apparatus, and a repeated description thereof will be omitted here.

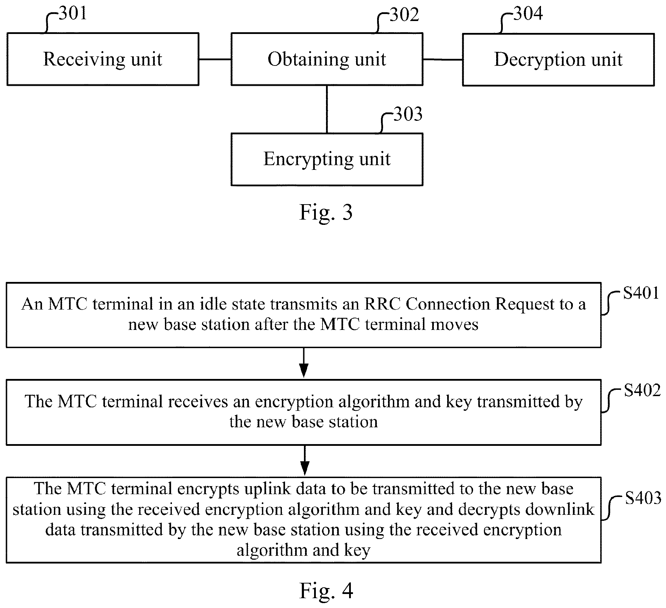

As illustrated in Fig.3 which is a schematic structural diagram of a data transmission apparatus at the network side according to an embodiment of the invention, the apparatus includes:
A receiving unit 301 is configured to receive an RRC Connection Request transmitted by an MTC terminal in an idle state after the MTC terminal moves, the RRC Connection Request carries a terminal identifier of the MTC terminal and data encryption related information of the MTC terminal;
An obtaining unit 302 is configured to obtain a new encryption algorithm and key corresponding to the MTC terminal according to the terminal identifier and the data encryption related information received by the receiving unit 301;
An encrypting unit 303 is configured to encrypt downlink data to be transmitted to the MTC terminal using the new encryption algorithm and key obtained by the obtaining unit 302; and
A decrypting unit 304 is configured to decrypt uplink data transmitted by the MTC terminal using the new encryption algorithm and key obtained by the obtaining unit 302.

If a source base station does not indicate a fixed resource, over which data is transmitted in an idle state, before the MTC terminal moves, then the data encryption related information includes an encryption algorithm input parameter, and accordingly the obtaining unit 302 can include:
A first obtaining sub-unit is configured to obtain an original encryption algorithm and key corresponding to the MTC terminal according to the terminal identifier;
A first updating sub-unit is configured to update the obtained original encryption algorithm using the encryption algorithm input parameter; and
A first determining sub-unit configured to determine the encryption algorithm updated by the first updating sub-unit as the new encryption algorithm corresponding to the MTC terminal.

If a source base station indicates a fixed resource, over which data is transmitted in an idle state, before the MTC terminal moves, then the data encryption related information includes an EDGI of a cell where the MTC terminal resides before the MTC terminal moves, and accordingly the obtaining unit 302 can include:
A second obtaining sub-unit is configured to obtain an original encryption algorithm, encryption algorithm input parameter and key corresponding to the terminal identifier from the cell corresponding to the ECGI;
A second updating sub-unit is configured to update the obtained original encryption algorithm using the encryption algorithm input parameter; and
A second determining sub-unit configured to determine the encryption algorithm updated by the second updating sub-unit as the new encryption algorithm corresponding to the MTC terminal.

In a particular implementation, the data transmission apparatus at the network side according to the embodiment of the invention can further include:
A resource allocating unit is configured to allocate for the MTC terminal a transmission resource over which data is transmitted in an idle state;
An instructing unit is configured to instruct the MTC terminal in a response message to the RRC Connection Request to transmit uplink data over the allocated transmission resource after entering an idle state; and
The transmitting unit is configured to transmit uplink data to the MTC terminal over the allocated transmission resource after the MTC terminals enters the idle state.

It shall be noted that the data transmission apparatus at the network side above can be arranged in a base station device.

Based upon the same inventive idea, embodiments of the invention further provide a data transmission method and apparatus at the MTC terminal side, an MTC terminal and a data transmission system. Since the method, apparatus, device and system address the problem under a similar principle to the data transmission method at the network side, reference can be made to the implementation of the data transmission method at the network side for implementations of the method, apparatus, device and system above, and a repeated description thereof will be omitted here.

### Third Embodiment

As illustrated in Fig.4 which is a schematic flow chart of an implementation of a data transmission method at the MTC terminal side according to an embodiment of the invention, the method includes the following operations:
S401. An MTC terminal in an idle state transmits an RRC Connection Request to a new base station after the MTC terminal moves;
In a particular implementation, if the MTC terminal needs to transmit uplink data after it moves to a new cell, then the MTC terminal initiates a random access and in a third stage of the random access the MTC terminal transmits the RRC Connection Request carrying its own terminal identifier and the data encryption related information to the base station.

It shall be noted that if the MTC terminal currently has uplink data to be transmitted, then the uplink data can also be transmitted in the third stage of the random access.

S402. The MTC terminal receives an encryption algorithm and key transmitted by the new base station;
The encryption algorithm and key are obtained by the new base station according to the terminal identifier and the data encryption related information transmitted by the MTC terminal; and
S403. The MTC terminal encrypts uplink data to be transmitted to the new base station using the received encryption algorithm and key and decrypts downlink data transmitted by the new base station using the received encryption algorithm and key.

If the new base station reallocates a fixed resource for the MTC terminal, then the data transmission method at the MTC terminal side can further include the following operations:
In a first operation, the MTC terminal receives indication information, transmitted by the new base station, of the transmission resource over which data is transmitted after the MTC terminal enters an idle state;
The indication information is indicated by the new base station in a fourth stage of the random access in which it feeds a response message, to the RRC Connection Request, back to the MTC terminal; and
In a second operation, the MTC terminal transmits the uplink data over the transmission resource indicated by the indication information after entering an idle state.

In the process above, if the MTC terminal has uplink data to be transmitted after moving, then it can initiate a random access and transmit the RRC Connection Request carrying its own terminal identifier and data encryption related information to the new base station in a third stage of the random access, and after the new base station obtains the encryption algorithm and key corresponding to the MTC terminal according to the received terminal identifier and data encryption related information, the new base station indicates to the MTC terminal the encryption algorithm and key used for data transmission, and the MTC terminal encrypts uplink data to be transmitted to the new base station according to the indication of the new base station and decrypts downlink data transmitted by the new base station using the received encryption algorithm and key.

### Fourth Embodiment

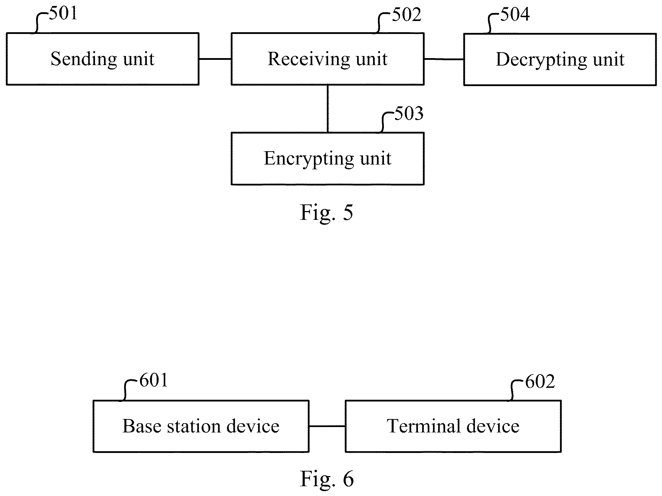

As illustrated in Fig.5 which is a schematic structural diagram of a data transmission apparatus at the MTC terminal side according to an embodiment of the invention, the apparatus includes:
A sending unit 501 is configured to transmit an RRC Connection Request to a new base station after an MTC terminal, in an idle state, in which the apparatus resides moves;
The Connection Request carries a terminal identifier of the MTC terminal and data encryption related information of the MTC terminal;
A receiving unit 502 is configured to receive an encryption algorithm and key transmitted by the new base station;
The encryption algorithm and key are obtained by the new base station according to the terminal identifier of the MTC terminal and the data encryption related information of the MTC terminal;
An encrypting unit 503 is configured to encrypt uplink data to be transmitted to the new base station using the received encryption algorithm and key; and
A decrypting unit 504 is configured to decrypt downlink data transmitted by the new base station using the received encryption algorithm and key.

In a particular implementation, the data transmission apparatus at the network side can further include a transmitting unit, where:
The receiving unit 502 is further configured to receive indication information, transmitted by the new base station, of a transmission resource over which data is transmitted in an idle state;
The indication information can be indicated by the new base station in a response message to the RRC Connection Request; and
The transmitting unit is configured to transmit uplink data over the transmission resource indicated by the indication information after the MTC terminal enters an idle state.

In a particular implementation, the data transmission apparatus at the MTC terminal side above can be arranged in an MTC terminal device.

### Fifth Embodiment

As illustrated in Fig.6 which is a schematic structural diagram of a data transmission system according to an embodiment of the invention, the system includes a base station device 601 and an MTC terminal device 602, where the base station device 601 can include the data transmission apparatus at the network side above according to the second embodiment, and the MTC terminal device 602 can include the data transmission apparatus at the MTC terminal side according to the fourth embodiment.

Preferably the MTC terminal according to the embodiment of the invention can be an MTC terminal.

With the data transmission method, apparatus, system and related devices according to the embodiments of the invention, after the MTC terminal moves, the MTC terminal initiates a random access to the new base station and carries its own terminal identifier and data encryption information in an RRC Connection Request, so that the new base station can obtain a new encryption algorithm and key corresponding to the MTC terminal according to the terminal identifier and the data encryption information, and thus the new base station can encrypt data to be transmitted, and decrypt received data, using the obtained new encryption algorithm and key; and for the MTC terminal, the base station notifies the MTC terminal of the obtained new encryption algorithm and key in a response message to the RRC Connection Request, so that the MTC terminal can encrypt data to be transmitted, and decrypt received data, using the received new encryption algorithm and key, thus enabling the data to be transmitted between the MTC terminal and the base station.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention.

## Claims

1. A data transmission method, comprising:
receiving (S201), by a new base station, an Radio Resource Control, RRC, Connection Request transmitted by an Machine-Type communication, MTC, terminal in an idle state after the MTC terminal moves, wherein the Connection Request carries a terminal identifier of the MTC terminal and data encryption related information of the MTC terminal;
obtaining (S202), by the new base station, a new encryption algorithm and key corresponding to the MTC terminal according to the terminal identifier and the data encryption related information; and
encrypting (S203) downlink data to be transmitted to the MTC terminal using the obtained new encryption algorithm and key, and decrypting uplink data transmitted by the MTC terminal using the obtained new encryption algorithm and key.

2. The method according to claim 1, wherein if a source base station does not indicate a fixed resource, over which data is transmitted in an idle state, before the MTC terminal moves, then the data encryption related information comprises an encryption algorithm input parameter; and
obtaining, by the new base station, the new encryption algorithm and key corresponding to the MTC terminal according to the terminal identifier and the data encryption related information comprises:
obtaining, by the new base station, an original encryption algorithm and key corresponding to the MTC terminal according to the terminal identifier;
updating the obtained original encryption algorithm using the encryption algorithm input parameter; and
determining the updated encryption algorithm as the new encryption algorithm corresponding to the MTC terminal

3. The method according to claim 1, wherein if a source base station indicates a fixed resource, over which data is transmitted in an idle state, before the MTC terminal moves, then the data encryption related information comprises an E-UTRAN Cell Global Identifier (ECGI) of a cell where the MTC terminal resides before the MTC terminal moves; and
obtaining, by the new base station, the new encryption algorithm and key corresponding to the MTC terminal according to the terminal identifier and the data encryption related information comprises:
obtaining, by the new base station, an original encryption algorithm, encryption algorithm input parameter and key corresponding to the terminal identifier from the cell corresponding to the ECGI;
updating the obtained original encryption algorithm using the obtained encryption algorithm input parameter; and
determining the updated encryption algorithm as the new encryption algorithm corresponding to the MTC terminal.

4. The method according to claim 1, 2 or 3, further comprising:
allocating, by the new base station, for the MTC terminal a transmission resource over which data is transmitted in an idle state;
instructing the MTC terminal in a response message to the Connection Request to transmit uplink data over the allocated transmission resource after entering an idle state; and
transmitting uplink data to the MTC terminal over the allocated transmission resource after the MTC terminals enters the idle state.

5. A data transmission apparatus, comprising:
a receiving unit (301) configured to receive an Radio Resource Control, RRC, Connection Request transmitted by an Machine-Type communication, MTC, terminal in an idle state after the MTC terminal moves, wherein the Connection Request carries a terminal identifier of the MTC terminal and data encryption related information of the MTC terminal;
an obtaining unit (302) configured to obtain a new encryption algorithm and key corresponding to the MTC terminal according to the terminal identifier and the data encryption related information received by the receiving unit;
an encrypting unit (303) configured to encrypt downlink data to be transmitted to the MTC terminal using the obtained new encryption algorithm and key; and
a decrypting unit (304) configured to decrypt uplink data transmitted by the MTC terminal using the obtained new encryption algorithm and key.

6. The apparatus according to claim 5, wherein if a source base station does not indicate a fixed resource, over which data is transmitted in an idle state, before the MTC terminal moves, then the data encryption related information comprises an encryption algorithm input parameter; and
the obtaining unit (302) comprises:
a first obtaining sub-unit configured to obtain an original encryption algorithm and key corresponding to the MTC terminal according to the terminal identifier;
a first updating sub-unit configured to update the obtained original encryption algorithm using the encryption algorithm input parameter; and
a first determining sub-unit configured to determine the encryption algorithm updated by the first updating sub-unit as the new encryption algorithm corresponding to the MTC terminal.

7. The apparatus according to claim 5, wherein if a source base station indicates a fixed resource, over which data is transmitted in an idle state, before the MTC terminal moves, then the data encryption related information comprises an EDGI of a cell where the MTC terminal resides before the MTC terminal moves; and
the obtaining unit (302) comprises:
a second obtaining sub-unit configured to obtain an original encryption algorithm, encryption algorithm input parameter and key corresponding to the terminal identifier from the cell corresponding to the ECGI;
a second updating sub-unit configured to update the obtained original encryption algorithm using the encryption algorithm input parameter; and
a second determining sub-unit configured to determine the encryption algorithm updated by the second updating sub-unit as the new encryption algorithm corresponding to the MTC terminal.

8. The apparatus according to claim 5, 6 or 7, further comprising:
a resource allocating unit configured to allocate for the MTC terminal a transmission resource over which data is transmitted in an idle state;
an instructing unit configured to instruct the MTC terminal in a response message to the Connection Request to transmit uplink data over the allocated transmission resource after entering an idle state; and
a transmitting unit configured to transmit uplink data to the MTC terminal over the allocated transmission resource after the MTC terminals enters the idle state.

9. A base station device, comprising the apparatus according to any one of claims 4 to 7.

10. A data transmission method, comprising:
transmitting (S401), by an Machine-Type communication, MTC, terminal in an idle state, an Radio Resource Control, RRC, Connection Request to a new base station after the MTC terminal moves, wherein the Connection Request carries a terminal identifier of the MTC terminal and data encryption related information of the MTC terminal:
receiving (S402), by the MTC terminal, an encryption algorithm and key transmitted by the new base station, wherein the encryption algorithm and key are obtained by the new base station according to the terminal identifier and the data encryption related information; and
encrypting (S403), by the MTC terminal, uplink data to be transmitted to the new base station using the received encryption algorithm and key and decrypting downlink data transmitted by the new base station using the received encryption algorithm and key.

11. The method according to claim 10, further comprising:
receiving, by the MTC terminal, indication information, transmitted by the new base station, of a transmission resource over which data is transmitted after the MTC terminal enters an idle state, wherein the indication information is indicated by the new base station in a response message to the Connection Request; and
transmitting uplink data over the transmission resource indicated by the indication information after entering the idle state.

12. A data transmission apparatus, comprising:
a sending unit (501) configured to transmit an Radio Resource Control, RRC, Connection Request to a new base station after an Machine-Type communication, MTC, terminal, in an idle state, in which the apparatus resides moves, wherein the Connection Request carries a terminal identifier of the MTC terminal and data encryption related information of the MTC terminal;
a receiving unit (502) configured to receive an encryption algorithm and key transmitted by the new base station, wherein the encryption algorithm and key are obtained by the new base station according to the terminal identifier and the data encryption related information;
an encrypting unit (503) configured to encrypt uplink data to be transmitted to the new base station using the received encryption algorithm and key; and
a decrypting unit (504) configured to decrypt downlink data transmitted by the new base station using the received encryption algorithm and key.

13. The apparatus according to claim 12, further comprising a transmitting unit, wherein:
the receiving unit (502) is further configured to receive indication information, transmitted by the new base station, of a transmission resource over which data is transmitted in an idle state, wherein the indication information is indicated by the new base station in a response message to the RRC Connection Request; and
the transmitting unit is configured to transmit uplink data over the transmission resource indicated by the indication information after the MTC terminal enters the idle state.

14. An Machine-Type communication, MTC, terminal device, comprising the apparatus according to claim 12 or 13.

15. A data transmission system, comprising a base station device and an Machine-Type communication, MTC, terminal device, wherein the base station device comprises the apparatus according to any one of claims 4 to 7, and the MTC terminal device comprises the apparatus according to claim 12 or 13.

## Patentansprüche

1. Datenübertragungsverfahren, umfassend:
Empfangen (S201) durch eine neue Basisstation einer Radio Resource Control(RRC)-Verbindungsaufbauanforderung, die von einem Maschine Type Communication(MTC)-Endgerät in einem Ruhezustand im Anschluss an die Bewegung des MTC-Endgeräts übertragen wird, wobei die Verbindungsaufbauanforderung eine Endgerätekennung des MTC-Endgeräts und datenverschlüsselungsbezogene Informationen des MTC-Endgeräts trägt;
Erhalten (S202) durch die neue Basisstation eines neuen Verschlüsselungsalgorithmus und Schlüssels, die dem MTC-Endgerät entsprechen, in Übereinstimmung mit der Endgerätekennung und den datenverschlüsselungsbezogenen Informationen; und
Verschlüsseln (S203) von an das MTC-Endgerät zu übertragenden Downlink-Daten unter Verwendung des erhaltenen neuen Verschlüsselungsalgorithmus und Schlüssels und Entschlüsseln von Uplink-Daten, die von dem MTC-Endgerät übertragen werden, unter Verwendung des erhaltenen neuen Verschlüsselungsalgorithmus und Schlüssels.

2. Verfahren nach Anspruch 1, wobei die datenverschlüsselungsbezogenen Informationen einen Verschlüsselungsalgorithmus-Eingangsparameter umfassen, wenn eine Quell-Basisstation keine feste Ressource angibt, über die Daten in einem Ruhezustand übertragen werden, bevor sich das MTC-Endgerät bewegt; und
das Erhalten durch die neue Basisstation des neuen Verschlüsselungsalgorithmus und Schlüssels, die dem MTC-Endgerät entsprechen, in Übereinstimmung mit der Endgerätekennung und den datenverschlüsselungsbezogenen Informationen Folgendes umfasst:
Erhalten durch die neue Basisstation eines ursprünglichen Verschlüsselungsalgorithmus und Schlüssels, die dem MTC-Endgerät entsprechen, in Übereinstimmung mit der Endgerätekennung;
Aktualisieren des erhaltenen ursprünglichen Verschlüsselungsalgorithmus unter Verwendung des Verschlüsselungsalgorithmus-Eingangsparameters; und
Festlegen des aktualisierten Verschlüsselungsalgorithmus als den neuen Verschlüsselungsalgorithmus, der dem MTC-Endgerät entspricht.

3. Verfahren nach Anspruch 1, wobei dann, wenn eine Quell-Basisstation eine feste Ressource angibt, über die in einem Ruhezustand Daten übertragen werden, bevor sich das MTC-Endgerät bewegt, die datenverschlüsselungsbezogenen Informationen eine E-UTRAN-Zellen-Global-Kennung (ECGI) einer Zelle umfassen, wo sich das MTC-Endgerät aufhält, bevor sich das MTC-Endgerät bewegt; und
das Erhalten durch die neue Basisstation des neuen Verschlüsselungsalgorithmus und Schlüssels, die dem MTC-Endgerät entsprechen, in Übereinstimmung mit der Endgerätekennung und den datenverschlüsselungsbezogenen Informationen Folgendes umfasst:
Erhalten durch die neue Basisstation eines ursprünglichen Verschlüsselungsalgorithmus, Verschlüsselungsalgorithmus-Eingangsparameters und Schlüssels, die der Endgerätekennung entsprechen, von der Zelle, die der ECGI entspricht;
Aktualisieren des erhaltenen ursprünglichen Verschlüsselungsalgorithmus unter Verwendung des erhaltenen Verschlüsselungsalgorithmus-Eingangsparameters; und
Festlegen des aktualisierten Verschlüsselungsalgorithmus als den neuen Verschlüsselungsalgorithmus, der dem MTC-Endgerät entspricht.

4. Verfahren nach Anspruch 1, 2 oder 3, ferner umfassend:
Zuweisen durch die neue Basisstation für das MTC-Endgerät einer Übertragungsressource, über die in einem Ruhezustand Daten übertragen werden;
Anweisen des MTC-Endgeräts in einer Antwortnachricht auf die Verbindungsaufbauanforderung, über die zugewiesene Übertragungsressource nach dem Eintritt in einen Ruhezustand Uplink-Daten zu übertragen; und
Übertragen von Uplink-Daten an das MTC-Endgerät über die zugewiesene Übertragungsressource nach dem Eintritt des MTC-Endgeräts in den Ruhezustand.

5. Datenübertragungsvorrichtung, umfassend:
eine Empfangseinheit (301), die gestaltet ist, um eine Radio Resource Control(RRC)-Verbindungsaufbauanforderung zu empfangen, die von einem Maschine Type Communication(MTC)-Endgerät in einem Ruhezustand im Anschluss an die Bewegung des MTC-Endgeräts übertragen wird, wobei die Verbindungsaufbauanforderung eine Endgerätekennung des MTC-Endgeräts und datenverschlüsselungsbezogene Informationen des MTC-Endgeräts trägt;
eine Erhaltungseinheit (302), die gestaltet ist, um einen neuen Verschlüsselungsalgorithmus und Schlüssel, die dem MTC-Endgerät entsprechen,
in Übereinstimmung mit der Endgerätekennung und den datenverschlüsselungsbezogenen Informationen zu erhalten, die von der Empfangseinheit empfangen werden;
eine Verschlüsselungseinheit (303), die gestaltet ist, um an das MTC-Endgerät zu übertragende Downlink-Daten unter Verwendung des erhaltenen neuen Verschlüsselungsalgorithmus und Schlüssels zu verschlüsseln; und
eine Entschlüsselungseinheit (304), die gestaltet ist, um von dem MTC-Endgerät übertragene Uplink-Daten unter Verwendung des neuen erhaltenen Verschlüsselungsalgorithmus und Schlüssels zu entschlüsseln.

6. Vorrichtung nach Anspruch 5, wobei die datenverschlüsselungsbezogenen Informationen einen Verschlüsselungsalgorithmus-Eingangsparameter umfassen, wenn eine Quell-Basisstation keine feste Ressource angibt, über die Daten in einem Ruhezustand übertragen werden, bevor sich das MTC-Endgerät bewegt; und
die Erhaltungseinheit (302) Folgendes umfasst:
eine erste Erhaltungsuntereinheit, die gestaltet ist, um einen ursprünglichen Verschlüsselungsalgorithmus und Schlüssel, die dem MTC-Endgerät entsprechen, in Übereinstimmung mit der Endgerätekennung zu erhalten;
eine erste Aktualisierungsuntereinheit, die gestaltet ist, um den erhaltenen ursprünglichen Verschlüsselungsalgorithmus unter Verwendung des Verschlüsselungsalgorithmus-Eingangsparameters zu aktualisieren; und
eine erste Festlegungsuntereinheit, die gestaltet ist, um den von der ersten Aktualisierungsuntereinheit aktualisierten Verschlüsselungsalgorithmus als den neuen Verschlüsselungsalgorithmus festzulegen, der dem MTC-Endgerät entspricht.

7. Vorrichtung nach Anspruch 5, wobei dann, wenn eine Quell-Basisstation eine feste Ressource angibt, über die in einem Ruhezustand Daten übertragen werden, bevor sich das MTC-Endgerät bewegt, die datenverschlüsselungsbezogenen Informationen eine ECGI einer Zelle umfassen, wo sich das MTC-Endgerät aufhält, bevor sich das MTC-Endgerät bewegt; und
die Erhaltungseinheit (302) Folgendes umfasst:
eine zweite Erhaltungsuntereinheit, die gestaltet ist, um einen ursprünglichen Verschlüsselungsalgorithmus, Verschlüsselungsalgorithmus-Eingangsparameter und Schlüssel, die der Endgerätekennung entsprechen, von der Zelle zu erhalten, die der ECGI entspricht;
eine zweite Aktualisierungsuntereinheit, die gestaltet ist, um den erhaltenen ursprünglichen Verschlüsselungsalgorithmus unter Verwendung des Verschlüsselungsalgorithmus-Eingangsparameters zu aktualisieren; und
eine zweite Festlegungsuntereinheit, die gestaltet ist, um den von der zweiten Aktualisierungsuntereinheit aktualisierten Verschlüsselungsalgorithmus als den neuen Verschlüsselungsalgorithmus festzulegen, der dem MTC-Endgerät entspricht.

8. Vorrichtung nach Anspruch 5, 6 oder 7, ferner umfassend:
eine Ressourcenzuweisungseinheit, die gestaltet ist, um für das MTC-Endgerät eine Übertragungsressource zuzuweisen, über die in einem Ruhezustand Daten übertragen werden;
eine Anweisungseinheit, die gestaltet ist, um das MTC-Endgerät in einer Antwortnachricht auf die Verbindungsaufbauanforderung anzuweisen, Uplink-Daten über die zugewiesene Übertragungsressource nach dem Eintritt in einen Ruhezustand zu übertragen; und
eine Übertragungseinheit, die gestaltet ist, um an das MTC-Endgerät über die zugewiesene Übertragungsressource nach dem Eintritt des MTC-Endgeräts in den Ruhezustand Uplink-Daten zu übertragen.

9. Basisstationsgerät, das die Vorrichtung nach einem der Ansprüche 4 bis 7 umfasst.

10. Datenübertragungsverfahren, umfassend:
Übertragen (S401) durch ein Maschine Type Communication(MTC)-Endgerät in einem Ruhezustand einer Radio Resource Control(RRC)-Verbindungsaufbauanforderung an eine neue Basisstation im Anschluss an die Bewegung des MTC-Endgeräts, wobei die Verbindungsaufbauanforderung eine Endgerätekennung des MTC-Endgeräts und datenverschlüsselungsbezogene Informationen des MTC-Endgeräts trägt;
Empfangen (S402) durch das MTC-Endgerät eines Verschlüsselungsalgorithmus und Schlüssels, die von der neuen Basisstation übertragen werden, wobei der Verschlüsselungsalgorithmus und Schlüssel durch die neue Basisstation in Übereinstimmung mit der Endgerätekennung und den datenverschlüsselungsbezogenen Informationen erhalten werden; und
Verschlüsseln (S403) durch das MTC-Endgerät von an die neue Basisstation zu übertragenden Uplink-Daten unter Verwendung des empfangenen Verschlüsselungsalgorithmus und Schlüssels und Entschlüsseln von durch die neue Basisstation übertragenen Downlink-Daten unter Verwendung des empfangenen Verschlüsselungsalgorithmus und Schlüssels.

11. Verfahren nach Anspruch 10, ferner umfassen:
Empfangen durch das MTC-Endgerät von Informationen, die von der neuen Basisstation übertragen werden, zur Angabe einer Übertragungsressource, über die nach dem Eintritt des MTC-Endgerät in einen Ruhezustand Daten übertragen werden, wobei die Angabeinformationen von der neuen Basisstation in einer Antwortnachricht auf die Verbindungsaufbauanforderung angegeben werden; und
Übertragen von Uplink-Daten über die durch die Angabeinformationen angegebene Übertragungsressource nach Eintritt in den Ruhezustand.

12. Datenübertragungsvorrichtung, umfassend:
eine Sendeeinheit (501), die gestaltet ist, um eine Radio Resource Control(RRC)-Verbindungsaufbauanforderung im Anschluss an die Bewegung eines in einem Ruhezustand befindlichen Maschine Type Communication(MTC)-Endgeräts, in dem sich die Vorrichtung befindet, an eine neue Basisstation zu übertragen, wobei die Verbindungsaufbauanforderung eine Endgerätekennung des MTC-Endgeräts und datenverschlüsselungsbezogene Informationen des MTC-Endgeräts trägt;
eine Empfangseinheit (502), die gestaltet ist, um einen Verschlüsselungsalgorithmus und Schlüssel zu empfangen, die von der neuen Basisstation übertragen werden, wobei der Verschlüsselungsalgorithmus und Schlüssel durch die neue Basisstation in Übereinstimmung mit der Endgerätekennung und den datenverschlüsselungsbezogenen Informationen erhalten werden;
eine Verschlüsselungseinheit (503), die gestaltet ist, um an die neue Basisstation zu übertragende Uplink-Daten unter Verwendung des empfangenen Verschlüsselungsalgorithmus und Schlüssels zu verschlüsseln; und
eine Entschlüsselungseinheit (504), die gestaltet ist, um von der neuen Basisstation übertragene Downlink-Daten unter Verwendung des empfangenen Verschlüsselungsalgorithmus und Schlüssels zu entschlüsseln.

13. Vorrichtung nach Anspruch 12, ferner umfassend eine Übertragungseinheit, wobei:
die Empfangseinheit (502) ferner gestaltet ist, um von der neuen Basisstation übertragene Informationen zur Angabe einer Übertragungsressource, über die Daten in einem Ruhezustand übertragen werden, zu empfangen, wobei die Angabeinformationen von der neuen Basisstation in einer Antwortnachricht auf die RRC-Verbindungsaufbauanforderung angegeben werden; und
die Übertragungseinheit gestaltet ist, um Uplink-Daten über die durch die Angabeinformationen angegebene Übertragungsressource nach dem Eintritt des MTC-Endgeräts in den Ruhezustand zu übertragen.

14. Maschine Type Communication(MTC)-Endgerät, das eine Vorrichtung nach Anspruch 12 oder 13 umfasst.

15. Datenübertragungssystem, das ein Basisstationsgerät und ein Maschine Type Communication(MTC)-Endgerät umfasst,
wobei das Basisstationsgerät eine Vorrichtung nach einem der Ansprüche 4 bis 7 umfasst und das MTC-Endgerät eine Vorrichtung nach Anspruch 12 oder 13 umfasst.

## Revendications

1. Procédé de transmission de données, comprenant :
recevoir (S201), par une nouvelle station de base, une Demande de Connexion au Contrôle des Ressources Radio, RRC, transmise par un terminal de communication de Type Machine, MTC, dans un état de repos après le déplacement du terminal MTC, la Demande de Connexion transportant un identifiant de terminal du terminal MTC et des informations associées au chiffrement de données du terminal MTC ;
obtenir (S202), par la nouvelle station de base, un nouvel algorithme de chiffrement et une nouvelle clé de chiffrement correspondant au terminal MTC selon l'identifiant de terminal et les informations associées au chiffrement de données ; et
chiffrer (S203) des données de liaison descendante à transmettre au terminal MTC à l'aide du nouvel algorithme de chiffrement et de la nouvelle clé de chiffrement obtenus, et déchiffrer des données de liaison montante transmises par le terminal MTC à l'aide du nouvel algorithme de chiffrement et de la nouvelle clé de chiffrement obtenus.

2. Procédé selon la revendication 1, dans lequel, si une station de base source n'indique pas une ressource fixe, sur laquelle des données sont transmises dans un état de repos, avant le déplacement du terminal MTC, alors les informations associées au chiffrement de données comprennent un paramètre d'entrée d'algorithme de chiffrement ; et
obtenir, par la nouvelle station de base, le nouvel algorithme de chiffrement et la nouvelle clé de chiffrement correspondant au terminal MTC selon l'identifiant de terminal et les informations associées au chiffrement de données comprend :
obtenir, par la nouvelle station de base, un algorithme de chiffrement d'origine et une clé chiffrement d'origine correspondant au terminal MTC selon l'identifiant de terminal ;
mettre à jour l'algorithme de chiffrement d'origine obtenu à l'aide du paramètre d'entrée d'algorithme de chiffrement ; et
déterminer l'algorithme de chiffrement mis à jour en tant que nouvel algorithme de chiffrement correspondant au terminal MTC.

3. Procédé selon la revendication 1, dans lequel, si une station de base source indique une ressource fixe, au cours de laquelle des données sont transmises dans un état de repos, avant le déplacement du terminal MTC, alors les informations associées au chiffrement de données comprennent un Identifiant Global de Cellule E-UTRAN (ECGI) d'une cellule où se trouve le terminal MTC avant le déplacement du terminal MTC ; et
obtenir, par la nouvelle station de base, le nouvel algorithme de chiffrement et la nouvelle clé de chiffrement correspondant au terminal MTC selon l'identifiant de terminal et les informations associées au chiffrement de données comprend :
obtenir, par la nouvelle station de base, un algorithme de chiffrement d'origine, un paramètre d'entrée d'algorithme de chiffrement d'origine et une clé de chiffrement d'origine correspondant à l'identifiant de terminal à partir de la cellule correspondant à l'ECGI ;
mettre à jour l'algorithme de chiffrement d'origine obtenu à l'aide du paramètre d'entrée d'algorithme de chiffrement obtenu ; et
déterminer l'algorithme de chiffrement mis à jour en tant que nouvel algorithme de chiffrement correspondant au terminal MTC.

4. Procédé selon la revendication 1, 2 ou 3, comprenant en outre :
attribuer, par la nouvelle station de base, au terminal MTC une ressource de transmission sur laquelle des données sont transmises dans un état de repos ;
ordonner au terminal MTC dans un message de réponse à la Demande de Connexion de transmettre des données de liaison montante sur la ressource de transmission attribuée après l'entrée dans un état de repos ; et
transmettre des données de liaison montante au terminal MTC sur la ressource de transmission attribuée après l'entrée du terminal MTC dans l'état de repos.

5. Appareil de transmission de données, comprenant :
une unité de réception (301) configurée pour recevoir une Demande de Connexion au Contrôle des Ressources Radio, RRC, transmise par un terminal de communication de Type Machine, MTC, dans un état de repos après le déplacement du terminal MTC, la Demande de Connexion transportant un identifiant de terminal du terminal MTC et des informations associées au chiffrement de données du terminal MTC ;
une unité d'obtention (302) configurée pour obtenir un nouvel algorithme de chiffrement et une clé de chiffrement correspondant au terminal MTC selon l'identifiant de terminal et les informations associées au chiffrement de données reçus par l'unité de réception ;
une unité de chiffrement (303) configurée pour chiffrer des données de liaison descendante à transmettre au terminal MTC à l'aide du nouvel algorithme de chiffrement et de la nouvelle clé obtenus ; et
une unité de déchiffrement (304) configurée pour déchiffrer des données de liaison montante transmises par le terminal MTC à l'aide du nouvel algorithme de chiffrement et de la nouvelle clé de chiffrement obtenus.

6. Appareil selon la revendication 5, dans lequel, si une station de base source n'indique pas une ressource fixe, sur laquelle des données sont transmises dans un état de repos, avant le déplacement du terminal MTC, alors les informations associées au chiffrement de données comprennent un paramètre d'entrée d'algorithme de chiffrement ; et
l'unité d'obtention (302) comprend :
une première sous-unité d'obtention configurée pour obtenir un algorithme de chiffrement d'origine et une clé de chiffrement d'origine correspondant au terminal MTC selon l'identifiant de terminal ;
une première sous-unité de mise à jour configurée pour mettre à jour l'algorithme de chiffrement d'origine obtenu à l'aide du paramètre d'entrée d'algorithme de chiffrement ; et
une première sous-unité de détermination configurée pour déterminer l'algorithme de chiffrement mis à jour par la première sous-unité de mise à jour en tant que nouvel algorithme de chiffrement correspondant au terminal MTC.

7. Appareil selon la revendication 5, dans lequel, si une station de base source indique une ressource fixe, sur laquelle des données sont transmises dans un état de repos, avant le déplacement du terminal MTC, alors les informations associées au chiffrement de données comprennent un EDGI d'une cellule où se trouve le terminal MTC avant le déplacement du terminal MTC ; et
l'unité d'obtention (302) comprend :
une seconde sous-unité d'obtention configurée pour obtenir un algorithme de chiffrement d'origine, un paramètre d'entrée d'algorithme de chiffrement d'origine et une clé de chiffrement d'origine correspondant à l'identifiant de terminal à partir de la cellule correspondant à l'ECGI ;
une seconde sous-unité de mise à jour configurée pour mettre à jour l'algorithme de chiffrement d'origine obtenu à l'aide du paramètre d'entrée d'algorithme de chiffrement ; et
une seconde sous-unité de détermination configurée pour déterminer l'algorithme de chiffrement mis à jour par la seconde sous-unité de mise à jour en tant que nouvel algorithme de chiffrement correspondant au terminal MTC.

8. Appareil selon la revendication 5, 6 ou 7, comprenant en outre :
une unité d'attribution de ressource configurée pour attribuer au terminal MTC une ressource de transmission sur laquelle des données sont transmises dans un état de repos ;
une unité d'instruction configurée pour ordonner au terminal MTC dans un message de réponse à la Demande de Connexion de transmettre des données de liaison montante sur la ressource de transmission attribuée après l'entrée d'un état de repos ; et
une unité de transmission configurée pour transmettre des données de liaison montante au terminal MTC sur la ressource de transmission attribuée après l'entrée du terminal MTC dans l'état de repos.

9. Dispositif de station de base, comprenant l'appareil selon l'une quelconque des revendications 4 à 7.

10. Procédé de transmission de données, comprenant :
transmettre (S401), par un terminal de communication de Type Machine, MTC, dans un état de repos, une Demande de Connexion au Contrôle des Ressources Radio, RRC, à une nouvelle station de base après le déplacement du terminal MTC, la Demande de Connexion transportant un identifiant de terminal du terminal MTC et des informations associées au chiffrement de données du terminal MTC ;
recevoir (S402), par le terminal MTC, un algorithme de chiffrement et une clé transmis par la nouvelle station de base, l'algorithme de chiffrement et la clé étant obtenus par la nouvelle station de base selon l'identifiant de terminal et les informations associées au chiffrement de données ; et
chiffrer (S403), par le terminal MTC, des données de liaison montante à transmettre à la nouvelle station de base à l'aide de l'algorithme et de la clé de chiffrement reçus et déchiffrer des données de liaison descendante transmises par la nouvelle station de base à l'aide de l'algorithme et de la clé de chiffrement reçus.

11. Procédé selon la revendication 10, comprenant en outre : recevoir, par le terminal MTC, des informations d'indication, transmises par la nouvelle station de base, d'une ressource de transmission sur laquelle des données sont transmises après l'entrée du terminal MTC dans un état de repos, les informations d'indication étant indiquées par la nouvelle station de base dans un message de réponse à la Demande de Connexion ; et
transmettre des données de liaison montante sur la ressource de transmission indiquée par les informations d'indication après l'entrée dans l'état de repos.

12. Appareil de transmission de données, comprenant :
une unité d'envoi (501) configurée pour transmettre une Demande de Connexion au Contrôle des Ressources Radio, RRC, à une nouvelle station de base après le déplacement d'un terminal de communication de Type Machine, MTC, dans un état de repos, dans lequel se trouve l'appareil, la Demande de Connexion transportant un identifiant de terminal du terminal MTC et des informations associées au chiffrement de données du terminal MTC ;
une unité de réception (502) configurée pour recevoir un algorithme de chiffrement et une clé transmis par la nouvelle station de base, l'algorithme de chiffrement et la clé étant obtenus par la nouvelle station de base selon l'identifiant de terminal et les informations associées au chiffrement de données ;
une unité de chiffrement (503) configurée pour chiffrer des données de liaison montante à transmettre à la nouvelle station de base à l'aide de l'algorithme et de la clé de chiffrement reçus ; et
une unité de déchiffrement (504) configurée pour déchiffrer des données de liaison descendante transmises par la nouvelle station de base à l'aide de l'algorithme et de la clé de chiffrement reçus.

13. Appareil selon la revendication 12, comprenant en outre une unité de transmission, dans lequel :
l'unité de réception (502) est en outre configurée pour recevoir des informations d'indication, transmises par la nouvelle station de base, d'une ressource de transmission sur laquelle des données sont transmises dans un état de repos, les informations d'indication étant indiquées par la nouvelle station de base dans un message de réponse à la Demande de Connexion au RRC ; et
l'unité de transmission est configurée pour transmettre des données de liaison montante sur la ressource de transmission indiquée par les informations d'indication après l'entrée du terminal MTC dans l'état de repos.

14. Dispositif de terminal de communication de Type Machine, MTC, comprenant l'appareil selon la revendication 12 ou 13.

15. Système de transmission de données, comprenant un dispositif de station de base et un dispositif de terminal de communication de Type Machine, MTC, dans lequel le dispositif de station de base comprend l'appareil selon l'une quelconque des revendications 4 à 7, et le dispositif de terminal MTC comprend l'appareil selon la revendication 12 ou 13.
